Europäisches Patentamt

European Patent Office

Office européen des brevets

(19)

(11) Veröffentlichungsnummer: **0 044 556**
**B1**

(12) **EUROPÄISCHE PATENTSCHRIFT**

(45) Veröffentlichungstag der Patentschrift:
14.11.84

(51) Int. Cl.³: **H 04 B 17/02**

(21) Anmeldenummer: 81105705.8

(22) Anmeldetag: 20.07.81

(54) Verfahren zur Überwachung von Zwischenregeneratoren.

(30) Priorität: 22.07.80 DE 3027720
22.07.80 DE 3027755

(43) Veröffentlichungstag der Anmeldung:
27.01.82 Patentblatt 82/4

(45) Bekanntmachung des Hinweises auf die Patenterteilung:
14.11.84 Patentblatt 84/46

(84) Benannte Vertragsstaaten:
AT BE CH DE FR GB IT LI NL SE

(56) Entgegenhaltungen:
FR - A - 2 276 744
FR - A - 2 440 661

(73) Patentinhaber: Siemens Aktiengesellschaft, Berlin und München Wittelsbacherplatz 2, D-8000 München 2 (DE)

(72) Erfinder: Braun, Ewald, Ing.-grad., Plattlinger Strasse 63, D-8000 München 71 (DE)
Erfinder: Pospischil, Reginhard, Dr.-Ing., Gabriel-von-Seidl-Strasse 15, D-8032 Lochham (DE)
Erfinder: Stummer, Baldur, Dipl.-Ing., Wilhelm-Kuhnert-Strasse 21, D-8000 München 21 (DE)
Erfinder: Wahl, Jakob, Ing.-grad., Augsburger Strasse 35, D-8901 Königsbrunn (DE)

# Beschreibung

Die Erfindung betrifft ein Verfahren zur Überwachung von Zwischenregeneratoren, die einen Digitalsignal-Regenerator und einen Telemetriesignal-Regenerator enthalten, zwischen zwei Leitungsendgeräten eines digitalen Übertragungssystems, bei dem Telemetriesignale für jede Übertragungsrichtung getrennt über denselben Signalweg wie die digitalen Datensignale, jedoch in einer anderen Frequenzlage übertragen werden, bei dem vom ersten Telemetriesignal-Regenerator der kein Telemetriesignal empfängt, ein eigenes Telemetriesignal zyklisch ausgesendet wird und vom Telemetriesignal-Regenerator eines jeden folgenden Zwischenregenerators ein an das letzte empfangene Telemetriesignal anschliessendes Telemetriesignal mit Ergebnissen einer Fehlerüberwachung erzeugt wird, bei dem eine Überwachung des empfangenen und ausgesendeten Telemetriesignals durchgeführt wird und beim empfangsseitigen Leitungsendgerät die Zwischenregeneratoren durch Auszählen der Telemetriesignale lokalisiert werden.

In digitalen Übertragungssystemen ist es notwendig, Zwischenregeneratoren einzusetzen. Für die Ortung fehlerhafter Regeneratoren gibt es zwei grundsätzlich verschiedene Klassen von Ortungssystemen. Bei einer dieser Klassen muss zur Fehlerortung die Nachrichtenübertragung unterbrochen werden. Zu dieser Klasse gehören auch alle Verfahren mit Schleifenschluss in den einzelnen Zwischengeneratoren. Diese Verfahren sind sehr wirtschaftlich und gestatten eine exakte Fehlerortung. Diese kann jedoch bei nur selten oder kurzzeitig auftretenden Fehlern eine längere Betriebsunterbrechung erfordern.

Bei der zweiten Klasse von Ortungssystemen erfolgt die Fehlerortung während des Betriebs. Das hat den Vorteil, dass zur Suche eines Fehlers keine Betriebsunterbrechung erforderlich ist und dass man ferner eine langsame Verschlechterung eines Regenerators oder mehrerer bereits längere Zeit vor einem Betriebsausfall erkennen kann. Diese Ortungssysteme benötigen ein redundantes Übertragungssignal, das aufgrund eines fehlererkennenden Codes eine örtliche Fehlerauswertung zulässt, und ein Telemetriesystem zur Übertragung des Ergebnisses an eine auswertende Stelle. Ebenso kann natürlich auch der vollständige Ausfall des digitalen Empfangssignales oder der Ausfall der Stromversorgung übertragen werden. Diese Ortungssysteme haben zwar den Nachteil eines höheren Geräteaufwandes in den einzelnen Zwischenregeneratoren, dafür bieten sie jedoch betriebsmässig so viele Vorteile, dass sie in zunehmendem Mass, besonders bei Breitbandsystemen eingesetzt werden. Aus der Literatur sind bereits derartige Verfahren bekannt.

So ist in der Zeitschrift «Philips Telecommunication Review» Vol. 37, Nr. 3, August 1979, auf den Seiten 144 bis 169 ein 140 Mbit pro Sekunde «Koaxialtransmissionsystem» beschrieben, das mit einer Überwachungseinrichtung ausgestattet ist. Von einer Hauptstation kann die Fehlerinformation der einzelnen Zwischengeneratoren über eine Tastatur abgerufen werden.

Bei diesem Verfahren ist eine Adressierung der einzelnen Zwischengeneratoren notwendig. Dies erfordert aufwendige Prozeduren und führt zu unnötigen Zeitverzögerungen bei der Fehlermeldung. Ausserdem müssen bei den Zwischenregeneratoren unterschiedliche Adressen eingestellt werden.

Aus der FR-A-2 276 744 ist ein adressenfreies Überwachungssystem für Impulsregeneratoren bekannt, bei dem ein Rahmenschlüsselwort (oder Rahmenkennungswort) von dem ersten intakten Regenerator ausgesendet wird, jeweils gefolgt von einem Fehlerblock mit Information über die Fehlerrate der Übertragungsstrecke. Für jeden Regenerator ist ein Zeitabschnitt oder Kanal vorgesehen, der zur Übertragung des von einer Anfangs- oder Endekennung freien Fehlerblockes dient. Hier wird ausserdem geprüft, ob die Fehlerblöcke richtig gebildet und aneinandergereiht werden. Eine Überprüfung der vorhandenen Codeprüfeinrichtung findet jedoch nicht statt und kann unter Umständen – bei der Einhaltung der Coderegeln durch den Regenerator – auch vom nächsten Regenerator nicht erkannt werden.

Aufgabe der Erfindung ist es, ein adressfreies Verfahren zur Überwachung von Zwischenregeneratoren anzugeben, bei dem auch die Zwischenregeneratoren und deren Überwachungseinrichtungen ständig überprüft werden.

Die Aufgabe wird dadurch gelöst, dass jeder Telemetriesignal-Regenerator ein Telemetriesignal mit mindestens einem Startblock, einem Fehlerblock und einem Prüfblock erzeugt, dass in an sich bekannter Weise Überwachungsergebnisse der Übertragungsstrecke und des jeweiligen Digitalsignal-Regenerators in dem Fehlerblock des zugehörigen Telemetriesignals übertragen werden, dass eine Eigenüberwachung von Fehlerüberwachungseinrichtungen des Digitalsignal-Regenerators durch Simulation von Fehlern erfolgt und dass das Ergebnis der Eigenüberwachung in dem Prüfblock des zugehörigen Telemetriesignals übertragen wird.

Das Verfahren gestattet es, ohne Rahmenkennungswort zu arbeiten, da jedes von einem Telemetriesignal-Regenerator erzeugte Telemetriesignal einen Startblock aufweist. Die Arbeitsweise der Telemetriesignal-Regeneratoren bleibt gleich, egal ob es sich um den ersten oder einen beliebigen weiteren handelt. Die Eigenüberwachung ermöglicht es, zwischen Störungen der Übertragungsstrecke und der Zwischenregeneratoren zu unterscheiden. Das Ergebnis der Eigenüberwachung wird in den Prüfblock übertragen.

Bei diesem Verfahren ist besonders vorteilhaft, dass zur Eigenüberwachung der Fehlerüberwachungseinrichtungen der Zwischenregeneratoren während der Übertragung eines oder mehrerer Fehlerblöcke des zugeordneten Telemetriesignals den Fehlerüberwachungseinrichtungen ein Steuersignal zur Eigenüberwachung zugeführt wird. Während das Prüfergebnis der Übertragungsstrecke in einem Fehlerblock übertragen wird, wird eine Eigenprüfung der Überwachungseinrichtung der Zwischenregeneratoren durchgeführt.

Es ist ebenfalls vorteilhaft, dass das Telemetriesignal mindestens einen Startblock und mindestens einen Endeblock enthält.

Durch die Signalisierung von Anfang und Ende
eines Telemetriesignales ist es auf einfache Weise
möglich, die Telemetriesignale verschiedener
Zwischenregeneratoren aneinanderzureihen.

Das Verfahren wird besonders einfach dadurch,
dass die Eigenaussendung eines Telemetriesignals durch das Fehlen einer Anfangskennung im
Anschluss an ein Telemetriesignal ausgelöst wird.

Dieses Verfahren hat den Vorteil, dass das letzte
Telemetriesignal leicht vom Regenerator erkannt
werden kann und das eigene Telemetriesignal im
Anschluss ausgesendet wird.

Bei diesem Verfahren ist es besonders vorteilhaft, dass ein nicht vortäuschbares Rahmenkennungswort zur Synchronisierung aller Telemetriesignal-Regeneratoren vom ersten intakten Zwischenregenerator ausgesendet und dem ersten
Telemetriesignal vorangestellt wird.

Durch das Rahmenkennungswort erfolgt eine
schnelle Synchronisierung der Telemetriesignal-
Regeneratoren. Das Rahmenkennungswort ist so
gewählt, dass es nicht durch ein anderes digitales
Signal vorgetäuscht werden kann. Dies wird dadurch erreicht, dass in der Anfangskennung des
Telemetriesignals Kombinationen vorhanden
sind, die im Rahmenkennungswort nicht auftreten. Zweckmässigerweise wird das Rahmenkennungswort dem ersten Telemetriesignal vorausgestellt.

Es ist ebenfalls vorteilhaft, dass, wenn kein
Rahmenkennungswort empfangen worden ist,
ein neu generiertes Rahmenkennungswort zum
selben Zeitpunkt innerhalb einer Zyklusdauer ausgesendet wird.

Durch diese Massnahme wird erreicht, dass das
Rahmenkennungswort auch dann an derselben
Stelle ausgesendet wird, wenn kein Rahmenkennungswort empfangen wird. An das Rahmenkennungswort schliesst sich dann automatisch das
Telemetriesignal an.

Weitere vorteilhafte Ausbildungen der Erfindung sind in den übrigen Unteransprüchen angegeben.

Ein Ausführungsbeispiel der Erfindung wird im
folgenden an Hand der Figuren 1 bis 8 näher beschrieben.

Es zeigen
Fig. 1 ein erfindungsgemässes Prinzipschaltbild
eines Überwachungssystems innerhalb eines digitalen Übertragungssystems,
Fig. 2 ein Zeitdiagramm mit dem Beispiel eines
Telemetriesignales entsprechend der Erfindung,
Fig. 3 das Prinzipschaltbild eines Telemetriesignalgenerators,
Fig. 4 eine Code-Überwachungsschaltung für
AMI-Code
Fig. 5 eine zweite Code-Überwachungsschaltung in einem Regenerator für pBqT-Code,

Fig. 6 den Aufbau eines alternativen Telemetriesignals,
Fig. 7 ein Zeitdiagramm für verschiedene alternative Telemetriesignal-Regeneratoren und
Fig. 8 ein Blockschaltbild eines alternativen Telemetriesignal-Regenerators.

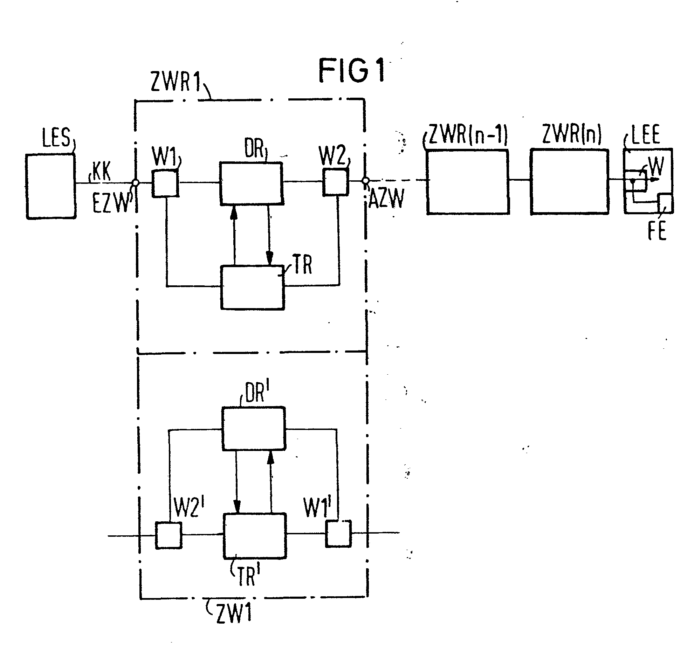

In Fig. 1 ist das Prinzipschaltbild für ein digitales Übertragungssystem dargestellt. Zwischen
dem Sendeteil LES eines ersten Leitungsendgerätes und dem Empfangsteil LEE eines zweiten Leitungsendgerätes sind je nach Länge und Eigenschaften des verwendeten Kabels verschiedene
Zwischenregeneratoren ZWR1,..., ZWR(n-1)
und ZWR(n) eingeschaltet. Der Ausgang des
Sendeteiles LES des Leitungsendgerätes ist beispielsweise über ein Koaxialkabel KK mit dem Eingang EZW eines ersten kompletten Zwischenregenerators ZW1 verbunden. Über eine erste Frequenzweiche W1 ist ein Digitalsignal-Regenerator DR angeschaltet und über einen zweiten Ausgang der Frequenzweiche W1 ein Telemetrie-Signalregenerator TR über seinen Eingang ET angeschaltet. Die Frequenzweiche W1 trennt das in einem anderen Frequenzbereich übertragene Telemetriesignal vom digitalen Datensignal ab. Die
Ausgänge beider Regeneratoren sind über eine
zweite Frequenzweiche W2 zusammengeführt
und auf den Ausgang AZW des Zwischenregenerators geschaltet. Bei einigen Übertragungseinrichtungen können die Frequenzweichen W1, W2
durch einen Abzweigpunkt und einen Zusammenführungspunkt ersetzt werden. Im Zwischenregenerator ZW1 ist diese Anordnung je einmal
für jede Übertragungsrichtung vorhanden. Die
Baugruppen für die Gegenrichtung sind mit den
gleichen Kennzeichen bezeichnet, jedoch zusätzlich mit einem Auslassungszeichen (') indiziert.
Ausser einem kompletten Zwischenregenerator
ZW1 sind nur die in einer Richtung wirksamen
Teile ZWR(n-1) und ZWR(n) des Zwischenregenerators als rechteckige Kästen dargestellt. Der
Empfangsteil LEE des zweiten Leitungsendgerätes enthält wiederum eine Frequenzweiche W und
eine Fehlererkennungseinrichtung FE.

Auf dem Koaxialkabel KK werden ausser dem
digitalen Signal auch die Telemetriesignale übertragen. In einer Frequenzweiche, z.B. W1 am Eingang eines Zwischenregenerators, z.B. ZWR1
werden die Telemetriesignale abgezweigt und einem Telemetriesignal-Regenerator zugeführt. Der
Telemetriesignal-Regenerator hat die Aufgabe,
die empfangenen Telemetriesignale zu regenerieren, die digitalen Signale sowie den Digitalsignal-
Regenerator DR zu überprüfen und die Prüfergebnisse im Telemetriesignal an die auswertende
Stelle, die Fehlererkennungseinrichtung FE zu
übertragen. Ist von dem Telemetriesignal eines
Zwischenregenerators ZWR1 die Rede, so handelt es sich um das von seinem Telemetriesignal-
Regenerator TR erzeugte Telemetriesignal. Das
digitale Signal wird unabhängig vom Telemetriesignal im Digitalsignal-Regenerator DR des Zwischenregenerators ZWR1 regeneriert und weitergesendet. Zwischen dem Digitalsignal-Regenerator DR und dem Telemetriesignal-Regenerator TR bestehen Verbindungen, über die Prüfsignale übertragen werden. Die Ausgangssignale beider Regeneratoren werden bei unterschiedlicher Frequenzlage über eine zweite Frequenzweiche W2 zusammengesetzt. Die Spannungsversorgung über eine Fernspeiseweiche wurde nicht dargestellt.

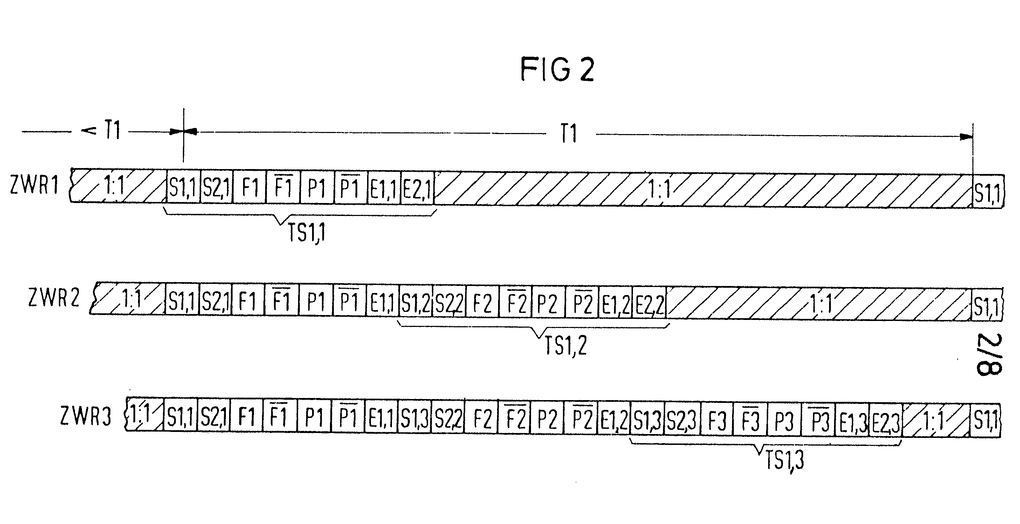

In Fig. 2 ist der Aufbau eines Telemetriesignales TS und die Aneinanderreihung mehrerer Telemetriesignale dargestellt. Ein Telemetriesignal TS besteht beispielsweise aus zwei Startblöcken S1 und S2. Daran schliesst sich ein Fehlerblock F1 an, der zweimal, beim zweitenmal invertiert, übertragen wird. Der Fehlerblock F1 enthält beispielsweise die Fehlerrate des übertragenen digitalen Datensignals. An den zweiten Fehlerblock schliesst sich ein Prüfblock P an, der ebenfalls zweimal, beim zweitenmal invertiert, übertragen wird. In dem Prüfblock wird das Prüfergebnis einer Eigenprüfung des Überwachungsteiles des Zwischenregenerators übertragen. An den Prüfblock schliessen sich zwei Endblöcke E1,1 und E2,1 an.

Das Verfahren wird nun anhand der Fig. 2 erläutert. Dabei wird angenommen, dass die Stromversorgung der drei dargestellten Zwischenregeneratoren ZWR1, ZWR2 und ZWR3 abgeschaltet wird. Nach dem Einschalten wird zunächst von allen Zwischenregeneratoren eine Dauerkombination statt eines Telemetriesignales abgegeben. Nach einer vorgegebenen Wartezeit $T2 < T1$ ($T1$ = Zykluszeit) beginnt der erste Zwischenregenerator mit dem Aussenden des ersten Telemetriesignales TS1,1. Durch den Empfang einer Dauerkombination oder eines Telemetriesignales während einer Rückstellzeit $T3 < T2$ wird die Eigensendung von Telemetriesignalen unterbunden. Stattdessen wird von dem zweiten Zwischengenerator ZWR2 das erste Telemetriesignal des ersten Zwischenregenerators ZWR1 weitergegeben. Nach dem Empfang des ersten Endezeichens E1,1 beginnt der zweite Zwischenregenerator ZWR2 mit dem Aussenden des Startblockes S1,2 seines ersten Telemetriesignales. Da während der Zeit der Aussendung des ersten Startblockes ein zweiter Endeblock E2,1 empfangen wird, werden auch die folgenden Blöcke des ersten Telemetriesignales TS1,2 des zweiten Zwischenregenerators ZWR2 ausgesendet. In gleicher Weise lässt der dritte Zwischenregenerator ZWR3 die ersten Telemetriesignale des ersten und zweiten Zwischenregenerators ZWR2 durch. Erst nach Empfang eines zweiten Endsignales E2,2 wird sein erstes Telemetriesignal TS1,3 ausgesendet. Wird kein Prüfsignal ausgesendet, so wird wiederum zweckmässigerweise ein bestimmtes Signal, z.B. ein 1:1-Wechsel ausgesendet. Bei dem Empfang dieses Dauersignales für eine Rückstellzeit $T3 < T2$ wird dem Zwischenregenerator die Aussendung eines eigenen Telemetriesignales untersagt, statt dessen wird das empfangene Signal weitergegeben. Zu einer selbständigen Aussendung des eigenen Telemetriesignales, d.h. nicht ausgelöst durch das Telemetriesignal des vorangehenden Zwischenregenerators, kommt es nur, wenn für eine Prüfzeit $T > T1$ kein Telemetriesignal, keine Dauerkombination oder keine zwei aufeinanderfolgenden Ende-Blöcke empfangen werden.

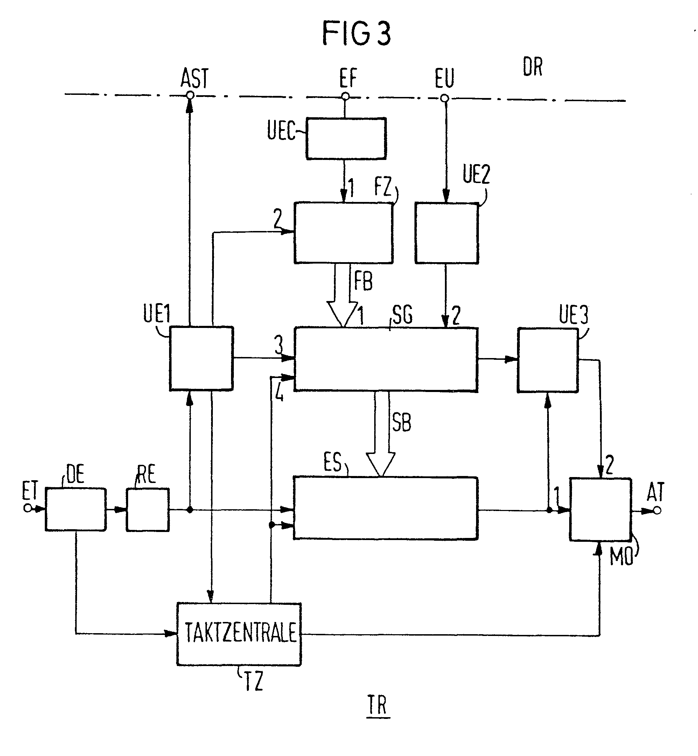

In Fig. 3 ist das Prinzipschaltbild eines Telemetriesignal-Regenerators TR dargestellt. Über einen Eingang ET wird dem Telemetriesignal-Regenerator TR das Telemetriesignal zugeführt. Es gelangt über einen Demodulator DE und einen Regenerator RE auf einen Eingang einer Einsetzschaltung ES. Mit dem Ausgang des Regenerators RE ist ausserdem eine erste Überwachungseinrichtung UE1 verbunden. Ein erster Ausgang dieser Überwachungseinrichtung führt auf einen Anschlusspunkt AST, ein weiterer Ausgang ist auf einen Rücksetzeingang 2 eines Fehlerzählers FZ geschaltet und ein dritter Ausgang der ersten Überwachungseinrichtung ist mit dem Eingang 3 eines Signalgenerators SG verbunden. Der Fehlerzähler FZ ist über einen Datenbus FB mit dem Signalgenerator verbunden. Der Fehlerzähler FZ ist mit dem Ausgang einer Code-Überwachungseinrichtung UEC verbunden, deren Eingang EF mit dem Digitalsignal-Regenerator DR verbunden ist. Über einen weiteren Eingang EU ist eine zweite Überwachungsschaltung UE2 an den Digitalsignal-Regenerator angeschlossen, die sein Ausgangssignal überwacht. Der Ausgang der zweiten Überwachungsschaltung UE2 ist mit einem zweiten Eingang des Signalgenerators SG verbunden. Der Signalgenerator ist wiederum über einen Datenbus SB mit der Einsetzschaltung ES verbunden. Der Ausgang des Signalgenerators und der Ausgang der Einsetzschaltung ist ausserdem mit einer dritten Überwachungsschaltung UE3 verbunden, deren Ausgang mit einem zweiten Eingang, einem Steuereingang, eines Modulators MO verbunden ist. Der Ausgang der Einsetzschaltung ES ist mit dem Signaleingang 1 des Modulators MO verbunden. Der Ausgang des Modulators ist auf einen Anschlusspunkt AT geführt, der mit einem zweiten Eingang der zweiten Frequenzweiche W2 des Zwischenregenerators ZWR verbunden ist. Ausserdem ist eine Taktzentrale TZ dargestellt, die ein Signal vom Demodulator erhält. Taktausgänge der Taktzentrale sind mit dem Signalgenerator SG, der Einsetzschaltung ES und dem Modulator Mo verbunden. Von den ersten Überwachungsschaltung UE1 ist ausserdem eine Steuerleitung zur Taktzentrale TZ geführt.

Nach der frequenzmässigen Abtrennung in der Frequenzweiche W1 wird das Telemetriesignal über den Eingang ET dem Demodulator DE zugeführt. Das demodulierte Signal wird in einem Regenerator amplitudenmässig und zeitmässig regeneriert. Das regenerierte Telemetriesignal wird der ersten Überwachungsschaltung UE1 zugeführt und dort ausgewertet. So wird beispielsweise das Startsignal ausgewertet, indem eine entsprechende Binärkombination durch eine Gatterschaltung erkannt wird. Ist ein Telemetriesignal empfangen worden, so wird es über die Einsetzschaltung ES hinweg dem Modulator zugeführt und unverändert wieder ausgesendet. Wird von der ersten Überwachungsschaltung UE1 dagegen der erste Endeblock erkannt, so wird ein Signal an den Signalgenerator SG abgegeben, der einen Startblock generiert und diesen an die Einsetzschaltung ES übergibt. Die Einsetzschaltung enthält einen Parallel-Serien-Umsetzer, beispielsweise ein Schieberegister. Statt des zweiten Endeblockes des empfangenen Telemetriesignales wird jetzt ein Startblock übertragen. Erkennt die erste Überwachungsschaltung UE1 einen zweiten Endeblock, so wird ein zweiter Startblock übertragen und im Anschluss daran ein Fehlerblock – beispielsweise doppelt – übertragen. Anschliessend werden zwei Prüfblöcke übertragen. Die Information für die Fehlerblöcke und Prüfblöcke wird dem Fehlerzähler und der zweiten Überwachungsschaltung UE2 entnommen. Während der Fehlerzähler beispielsweise Information über die Übertragungsfehlerrate beinhaltet, überprüft die zweite Überwachungsschaltung UE2, ob das Ausgangssignal des Digitalsignal-Regenerators fehlerfrei ist. Während des Aussendens der Fehlerblöcke wird von der ersten Überwachungsschaltung UE1 am Anschlusspunkt AST ein Signal abgegeben, mit dem die Überwachungseinrichtung im Digitalsignal-Regenerator getestet wird. Durch dieses Signal werden beispielsweise Codefehler simuliert. Diese Codefehler gelangen als Fehlerimpulse wiederum zum Fehlerzähler, so dass eine Eigenprüfung der Überwachungseinrichtungen durchgeführt werden kann. Am Ende des selbsterzeugten Telemetriesignals werden zwei Endeblöcke übertragen. Die dritte Überwachungsschaltung UE3 überprüft die Anzahl der von der Einsetzschaltung ausgegebenen Endeblöcke. Wird ein zweiter Endeblock von der Einsetzschaltung ausgesendet, ohne vom Signalgenerator SG generiert zu sein, so beruht dies auf einer Fehlfunktion des Telemetriesignal-Regenerators. Die Aussendung dieses zweiten fehlerhaften Endeblockes wird deshalb von der dritten Überwachungseinrichtung verhindert. Hierdurch wird vom nachfolgenden Telemetriesignal-Regenerator kein weiteres Telemetriesignal angehängt, und der fehlerhafte Telemetriesignal-Regenerator kann erkannt werden.

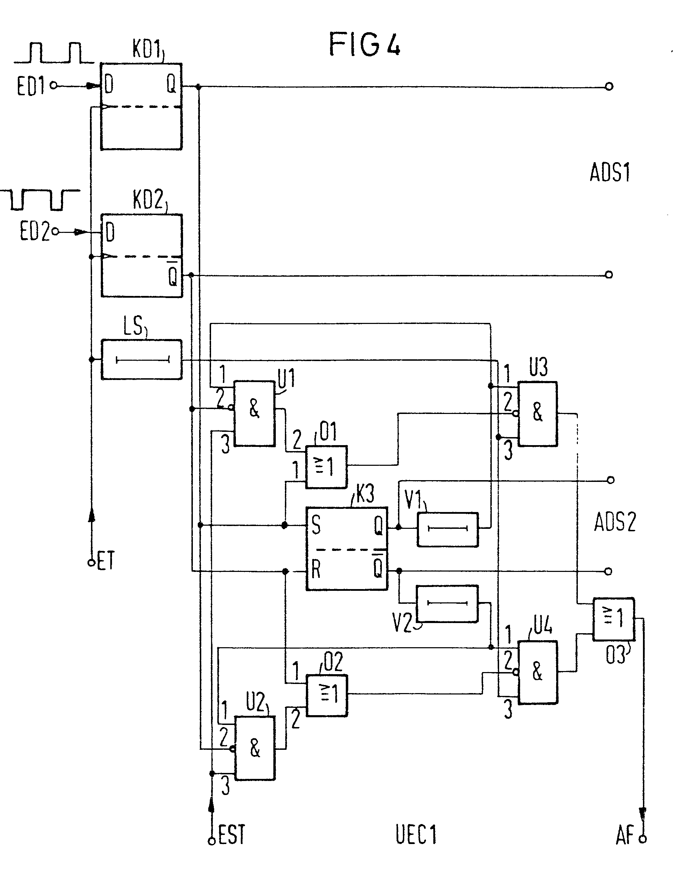

In der Fig. 4 ist eine Code-Überwachungseinrichtung UEC1 für einen AMI-Code dargestellt. Über einen ersten Eingang ED1 werden die positiven Impulse des AMI-Signales dem D-Eingang einer ersten D-Kippstufe KD1 zugeführt. Über einen zweiten Eingang ED2 werden die negativen Impulse des AMI-Signales dem D-Eingang einer zweiten D-Kippstufe KD2 zugeführt. Die Impulse werden von einem Empfangstakt TE der auf die Takteingänge der beiden Kippstufen KD1 und KD2 geführt ist, abgetastet. Der $\overline{Q}$-Ausgang der ersten D-Kippstufe KD1 ist mit dem Setzeingang einer SR-Kippstufe K3 verbunden. Der Q-Ausgang der zweiten D-Kippstufe KD2 ist mit dem Rücksetz-Eingang R der Kippstufe K3 verbunden. Über ein erstes Verzögerungsglied V1 (Verzögerungszeit beträgt eine Bitlänge) ist der Q-Ausgang der Kippstufe K3 mit dem Eingang 1 eines dritten UND-Gatters U3 verbunden. Der Q-Ausgang der dritten Kippstufe K3 ist über ein zweites Verzögerungsglied mit dem ersten Eingang eines vierten UND-Gatters U4 verbunden. Als Verzögerungsglieder können dabei auch bistabile Kippstufen, die von dem Takt TE angesteuert werden, verwendet werden. Der Takt TE ist über ein Laufzeitglied LZ auf den jeweils dritten Eingang des dritten und vierten UND-Gatters U3, U4 geführt. Der zweite Eingang des dritten UND-Gatters U3 ist mit dem Ausgang eines ersten ODER-Gatters O1 verbunden, dessen erster Eingang mit dem Setzeingang der Kippstufe K3 und dessen zweiter Eingang mit dem Ausgang eines ersten UND-Gatters U1 verbunden ist. In gleicher Weise ist der zweite Eingang des vierten UND-Gatters mit dem Ausgang eines zweiten ODER-Gatters verbunden, dessen erster Eingang mit dem Rücksetz-Eingang der dritten Kippstufe K3 und dessen zweiter Eingang mit dem Ausgang eines zweiten UND-Gatters U2 verbunden ist. Die Ausgänge des dritten und vierten UND-Gatters U3 und U4 sind mit den Eingängen eines dritten ODER-Gatters O3 verbunden, dessen Ausgang auf einem Punkt AF geführt ist. An diesem Ausgang werden Fehlerimpulse abgegeben, der Anschlusspunkt AF ist mit dem Eingang 1 des Fehlerzählers in Fig. 3 verbunden. Der erste Eingang des ersten UND-Gatters ist mit dem ersten Eingang des dritten UND-Gatters, d.h. mit dem Ausgang des ersten Verzögerungsgliedes V1 verbunden, der zweite, invertierende Eingang des ersten UND-Gatters ist mit dem $\overline{Q}$-Ausgang der zweiten D-Kippstufe KD2 verbunden. Der erste Eingang des zweiten UND-Gatters ist mit dem ersten Eingang des vierten UND-Gatters verbunden. Der zweite, invertierende Eingang des zweiten UND-Gatters U2 ist mit dem Q-Ausgang der ersten D-Kippstufe KD1 verbunden. Die dritten Eingänge des ersten und zweiten UND-Gatters U1 und U2 sind zusammengeschaltet und auf einen Anschlusspunkt EST geführt, der mit dem Anschlusspunkt AST des Telemetriesignal-Regenerators nach Fig. 3 verbunden wird. Über die Verzögerungsglieder V1 und V2 wird jeweils die Polarität des vorangegangenen Bits mit der Polarität des zuletzt abgetasteten Bits verglichen. Sind zwei Eingangsimpulse der gleichen Polarität empfangen worden, so wird über das dritte oder vierte UND-Gatter ein Fehlerimpuls abgegeben. Erfolgt dagegen der vorschriftsmässige Wechsel, d.h. auf einem positiven Impuls folt ein negativer Impuls, so wird kein Fehlerimpuls abgegeben. Am Steuereingang EST wird zur Überprüfung die logische Eins angelegt. Dadurch werden durch die UND-Gatter U1 bzw. U2 veranlasst, ebenfalls dann Fehlerimpulse abzugeben, wenn auf einen Empfangsimpuls kein weiterer Impuls folgt. Eine weitere Schaltungsvariante zur Überprüfung des Fehlerzählers im Telemetriesignal-Regenerator wäre beispielsweise durch die ständige Abgabe von Fehlerimpulsen der Code-Überwachungsschaltung möglich. In Fig. 4 sind einem die Ausgänge Q der ersten D-Kippstufe KD1 und $\overline{Q}$ der zweiten D-Kippfstufe KD2 herausgeführt. Diese Ausgänge, mit ADS1 bezeichnet, werden für einen codetransparenten AMI-Regenerator benötigt.

Ausserdem ist der Q- und $\overline{Q}$-Ausgang der dritten Kippstufe K3, mit ADS2 bezeichnet, herausgeführt. Diese Ausgänge werden bei einem nichtcodetransparenten AMI-Regenerator verwendet.

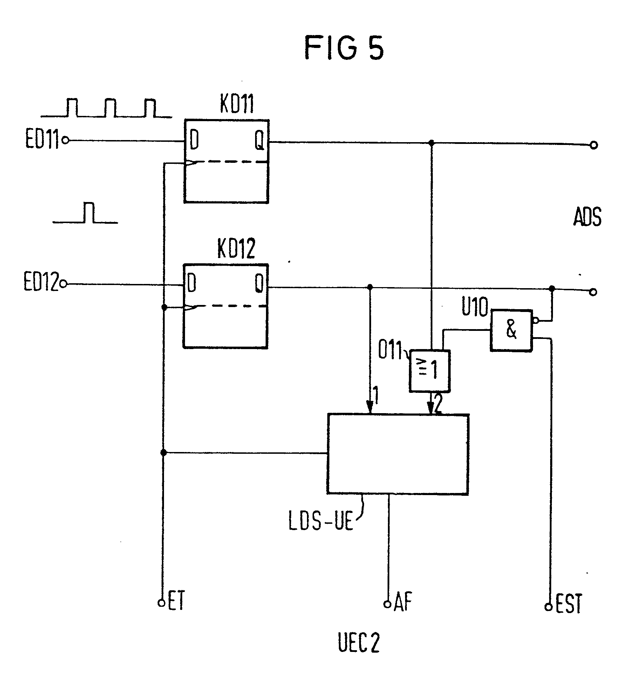

In Fig. 5 ist eine Code-Überwachungsschaltung UEC2 für pBqT-Code dargestellt. Über einen ersten Eingang ED11 werden einer ersten D-Kippstufe KD11 positive Schrittumschläge zugeführt. Die negativen Schrittumschläge werden invertiert, also ebenfalls als positive Impulse über einen zweiten Eingang ED12 einer zweiten D-Kippstufe KD12 zugeführt. Der Q-Ausgang dieser Kippstufe ist mit einem ersten Eingang einer LDS-Überwachungsschaltung verbunden. Der Q-Ausgang der ersten Kippstufe KD11 ist über ein ODER-Gatter O11 mit einem zweiten Eingang der LDS-Überwachungsschaltung verbunden. Der Takt TE ist sowohl auf die Takteingänge der beiden Kippstufen als auch auf den Takteingang der LDS-Überwachungsschaltung geführt. Der Ausgang eines UND-Gatters U10 ist mit einem zweiten Eingang des ODER-Gatters O11 verbunden. Das UND-Gatter U10 besitzt einen invertierenden Eingang, der mit dem Q-Ausgang der Kippstufe KD12 verbunden ist. Der zweite Eingang des UND-Gatters ist auf einen Anschlusspunkt EST geführt, der mit dem Punkt AST in Fig. 3 verbunden ist. Der Ausgang der Überwachungsschaltung LDS-UE ist auf einen Anschlusspunkt AF geführt, der mit dem Eingang 1 des Fehlerzählers FZ in Fig. 3 verbunden ist.

Beim pBqT-Code werden bestimmte Bildungsgesetze verwendet, um ein Gleichgewicht an übertragenen negativen und positiven Impulsen zu halten. In der LDS-Überwachungsschaltung wird dieses Bildungsgesetz nachvollzogen. Wird das Bildungsgesetz nicht eingehalten, so gibt die LDS-Überwachungsschaltung einen Fehlerimpuls ab. Die LDS-Überwachungsschaltung besteht im einfachsten Fall aus einem Vorwärts-Rückwärts-Zähler. Bleibt die digitale Summe nicht innerhalb eines bestimmten Bereichs, so gibt die LDS-Überwachungsschaltung einen Impuls ab. Über den Steuereingang EST wird der LDS-Überwachungsschaltung jedoch ein Überwachungssignal zugeführt. Dem zweiten Eingang der LDS-Überwachungsschaltung werden auch dann positive Schrittumschläge vorgetäuscht, wenn keine Schrittumschläge empfangen werden. Das Überwachungssignal liegt dabei beispielsweise während der Aussendung der Fehlerblöcke F an.

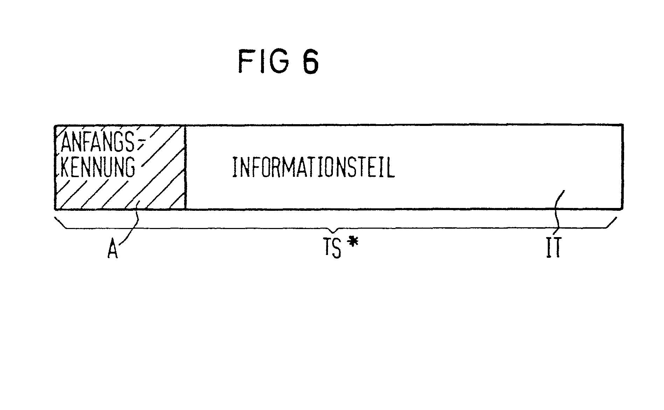

In Fig. 6 ist ein alternatives Telemetriesignal TS dargestellt. Das Telemetriesignal besteht aus einer Anfangskennung A und aus einem Informationsteil IT. Die Anfangskennung dient zur Unterscheidung, ob ein Telemetriesignal empfangen wird oder ob kein Telemetriesignal vorliegt, im Informationsteil IT werden die Überwachungsdaten übertragen. So können beispielsweise Fehlerrate, Signalausfall oder eine Meldung über den Verlust des Synchronismus übertragen werden.

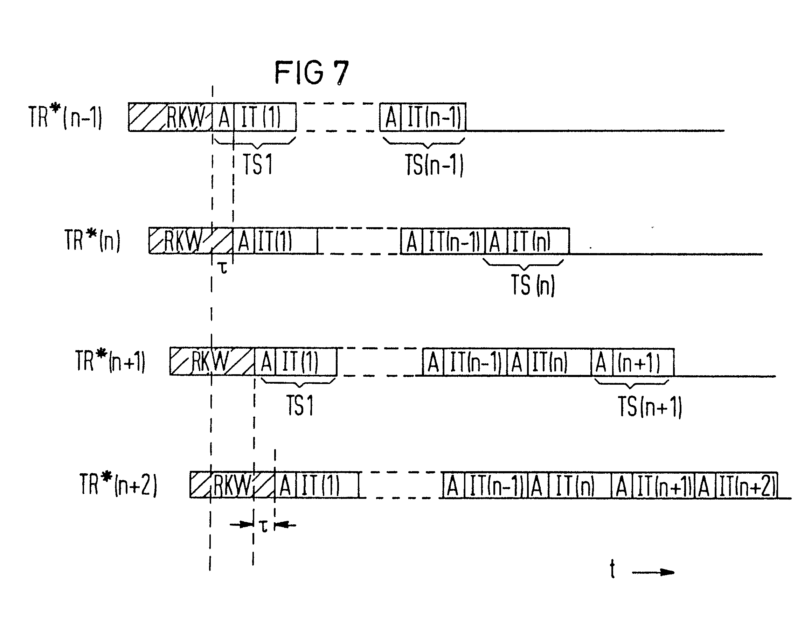

In Fig. 7 ist ein Zeitdiagramm für die verschiedenen Telemetriesignal-Regeneratoren dargestellt. Das Verfahren wird anhand dieses Zeitdiagramms erläutert. Der erste dargestellte Telemetriesignal-Regenerator TR*(n-1) im Zwischenregenerator ZWR*(n-1) sendet zuerst das Rahmenkennungswort RKW aus. Es folgt das erste Telemetriesignal TS*1 des ersten Zwischenregenerators. Es schliessen sich die Telemetriesignale der weiteren Telemetriesignal-Regeneratoren an. Als letztes wird das eigene Telemetriesignal TS*(n-1) übertragen. Der nächste Telemetriesignal-Regenerator TR*(n) gibt nach einer Zeitverzögerung $\tau$ das Rahmenkennungswort RKW und die Telemetriesignale TS*1 bis TS*(n-1) weiter. Nach dem letzten empfangenen Telemetriesignal TS*(n-1) wird keine Anfangskennung A mehr erkannt. Jetzt wird das eigene Telemetriesignal TS*(n) ausgesendet. Da aber das empfangene Telemetriesignal im Laufzeitspeicher LS um die Anfangskennung verzögert wurde, dies entspricht der Zeitverzögerung $\tau$, schliesst sich das eigene Telemetriesignal lückenlos an die empfangenen und weitergegebenen Telemetriesignale an. Das gleiche Verfahren wird bei allen folgenden Telemetriesignal-Regeneratoren wiederholt. In dem überwachenden empfangsseitigen Leitungsendgerät LEE wird durch Auszählen der empfangenen Telemetriesignale die Zugehörigkeit zu den Zwischenregeneratoren hergestellt. So enthält bei intakter Übertragungsstrecke das erste Telemetriesignal nach dem Rahmenkennungswort Information über den ersten Zwischenregenerator, und das letzte Telemetriesignal Information über den letzten, d.h. dem Empfänger des Leitungsendgerätes LEE nächsten Zwischenregenerator.

Erhält beispielsweise der alternative Zwischenregenerator TR*(n+1) kein Empfangssignal mehr, so sendet er selbständig das Rahmenkennungswort zur gleichen Zeit weiter aus und reiht unmittelbar nachfolgend sein eigenes Telemetriesignal an. Die Telemetriesignale der folgenden Telemetriesignal-Regeneratoren schliessen sich an dieses wieder an.

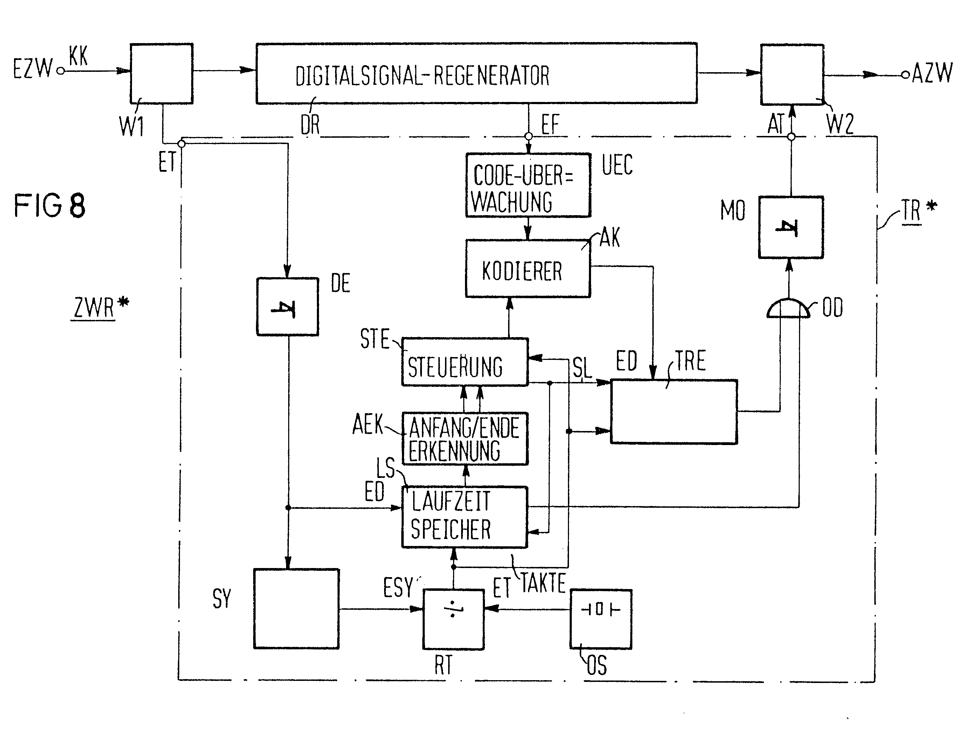

In Fig. 8 ist ein Blockschaltbild des alternativen Telemetriesignal-Regenerators TR, der dem Digitalsignal-Regenerator DR zugeordnet ist, dargestellt. Der Eingang EZW des alternativen Zwischenregenerators ZWR2 entspricht dem Eingang EZW in Fig. 1. Hier liegt das gesamte übertragene Signal, also das digitale Datensignal und das Telemetriesignal an. Der Anschlusspunkt EZW ist mit einem Eingang eines Abzweigpunktes W1 verbunden. Ein erster Ausgang des Abzweigpunktes W1 ist auf einen Eingang eines Digitalsignalregenerators DR geführt, ein zweiter Ausgang des Abzweigpunktes ist mit dem Eingang ET eines Demodulators DE im Telemetriesignal-Regenerator TR verbunden. Der Ausgang des Demodulators ist auf eine Synchronisiereinrichtung SY geführt und gleichzeitig an einen Dateneingang ED des Laufzeitspeichers LS angeschaltet. Der Ausgang der Synchronisiereinrichtung SY ist mit einem Synchronisiereingang ESY eines Frequenzteilers RT verbunden, dessen Takteingang ET an den Ausgang eines Oszillators OS angeschlossen ist. Als Laufzeitspeicher LS kann ein digitales Schieberegister verwendet werden. An die Parallelausgänge dieses Schieberegisters ist eine Anfang-Ende-Erkennungsschaltung AEK angeschaltet, deren Ausgänge in die Steuerung STE eingreifen. Über einen Eingang EF ist eine Code-Überwachungseinrichtung UEC an den Digitalsignalregenerator DR angeschaltet. Die Codeüberwachung überprüft beispielsweise Regelverletzungen des Übertragungscodes. Ebenso kann die Fehlerrate, Signalausfall, Taktausfall des Digitalsignal-Regenerator usw. überprüft werden. Der Ausgang der Code-Überwachung ist mit einem Codierer AK verbunden, der das Ergebnis der Codeüberwachung auswertet und in eine für die Übertragung geeignete binäre Form umsetzt. Der Ausgang des Codierers AK ist mit dem Dateneingang ED eines Telemetriesignalregisters TRE verbunden. Der Ausgang des Telemetriesignalregisters und der Ausgang des Laufzeitspeichers LS ist auf ein ODER-Glied OD geführt. Über eine Steuerleitung SL sind der Laufzeitspeicher LS und das Telemetriesignal-Register TRE mit der Steuerung STE verbunden. Der Ausgang des ODER-Gliedes ist mit einem Modulator MO verbunden, dessen Ausgang AT auf den ausgangsseitigen Zusammenführungspunkt W2 des Digitalsignalregenerators DR geschaltet ist. Ein Taktausgang des Frequenzteilers RT ist auf Takteingänge des Laufzeitspeichers LS, der Steuerung STE und des Telemetriesignal-Registers TRE geführt. Der Ausgang AZW des Zwischenregenerators stimmt mit dem gleichbezeichneten Ausgang in Fig. 1 überein.

Am Eingang EZW des alternativen Zwischenregenerators ZWR liegt das gesamte übertragene Signal an. Während das digitale Datensignal vom Digitalsignal-Regenerator regeneriert wird, gelangt das abgezweigte Telemetriesignal über einen Eingang ET zu einem Demodulator DE. An dessen Ausgang liegt das Telemetriesignal in digitaler, meist binärer Form vor. Sobald die Synchronisiereinrichtung SY das Rahmenkennungswort RKW erkennt, setzt sie den Frequenzteiler RT in die Anfangslage. Die Synchronisiereinrichtung enthält im wesentlichen Gatterschaltungen. Der Frequenzteiler RT ist so ausgelegt, dass er, entsprechend der Zyklusdauer mit der das Rahmenkennungswort erneut ausgesendet wird, ein Signal abgibt. Der gezeichnete Taktausgang des Frequenzteilers RT hat nur symbolischen Charakter, es werden verschiedene Takte zur Steuerung benötigt. Das vom Demodulator abgegebene Signal gelangt in einen Laufzeitspeicher, der besonders einfach als Schieberegister ausgebildet ist. An die Parallelausgänge dieses Schieberegisters ist die Anfangs-Ende-Erkennung AEK angeschaltet. Die Verzögerungszeit des Laufzeitspeichers entspricht der Länge der Anfangskennung A des Telemetriesignales. Das empfangene Telemetriesignal TSE wird verzögert über den Laufzeitspeicher LS über das ODER-Glied OD und den Modulator MO wieder ausgesendet. Wird kein weiteres Telemetriesignal empfangen, so gibt die Anfangs-Ende-Erkennung einen Befehl an die Steuerung STE ab. Diese gibt einen Befehl an den Codierer AK weiter, der eine Anfangskennung generiert und in das Telemetriesignalregister TR einschreibt. Nachdem das empfangene Telemetriesignal den Laufzeitspeicher verlassen hat, wird die Anfangskennung aus dem Telemetriesignalregister TR gelassen und über das ODER-Glied OD ausgesendet. Anschliessend wird der Informationsteil IT des eigenen Telemetriesignals ausgesendet. Wird kein Rahmenkennungswort REW mehr empfangen, so sorgt der Frequenzteiler RT dafür, dass trotzdem ein Rahmenkennungswort an derselben Stelle ausgesendet wird. Dies ist jedesmal der Fall, wenn der Frequenzteiler RT eine Nullstellung durchläuft. Das Rahmenkennungswort wird beispielsweise im Codierer generiert und über das Telegrafiesingalregister ausgesendet.

Nach dem Modulator MO werden im Zusammenführungspunkt W2 das digitale Datensignal und das Telemetriesingal wieder zusammengefasst.

**Patentansprüche**

1. Verfahren zur Überwachung von Zwischenregeneratoren (ZWR), die einen Digitalsignal-Regenerator (DR) und einen Telemetriesignal-Regenerator (TR) enthalten, zwischen zwei Leitungsendgeräten eines digitalen Übertragungssystems, bei dem Telemetriesignale für jede Übertragungsrichtung getrennt über denselben Signalweg wie die digitalen Datensignale, jedoch in einer anderen Frequenzlage übertragen werden, bei dem vom ersten Telemetriesignal-Regenerator (TR), der kein Telemetriesignal empfängt, ein eigenes Telemetriesignal zyklisch ausgesendet wird und vom Telemetriesignal-Regenerator (TR) eines jeden folgenden Zwischenregenerators (ZWR) ein an das letzte empfangene Telemetriesignal anschliessenden Telemetriesignal mit Ergebnissen einer Fehlerüberwachung erzeugt wird, bei dem eine Überwachung des empfangenen und ausgesendeten Telemetriesignals (TS) durchgeführt wird und beim empfangsseitigen Leitungsendgerät die Zwischenregeneratoren (ZWR) durch Auszählen der Telemetriesignale lokalisiert werden, dadurch gekennzeichnet, dass jeder Telemetriesignal-Regenerator (TR) ein Telemetriesignal (TS) mit mindestens einem Startblock (S), einem Fehlerblock (F) und einem Prüfblock (P) erzeugt, dass in an sich bekannter Weise Überwachungsergebnisse der Übertragungsstrecke und des jeweiligen Digitalsignal-Regenerators (DR) in dem Fehlerblock (F) des zugehörigen Telemetriesignals (TS) übertragen werden, dass eine Eigenüberwachung von Fehlerüberwachungseinrichtungen (UEC, UE2) des Digitalsignal-Regenerators (DR) durch Simulation von Fehlern erfolgt und dass das Ergebnis der Eigenüberwachung in dem Prüfblock (P) des zugehörigen Telemetriesignals (TS) übertragen wird.

2. Verfahren nach Anspruch 1, dadurch gekennzeichnet, dass zur Eigenüberwachung der Fehlerüberwachungseinrichtungen (UEC, UE2) der Zwischenregeneratoren während der Übertragung eines oder mehrere Fehlerblöcke (F) zugeordneten Telemetriesignals den Fehlerüberwachungseinrichtungen ein Steuersignal zur Eigenüberwachung zugeführt wird.

3. Verfahren nach Anspruch 1 oder 2, dadurch gekennzeichnet, dass das Telemetriesignal mindestens einen Startblock (S) und mindestens einen Endeblock (E) enthält.

4. Verfahren nach einem der vorhergehenden Ansprüche, dadurch gekennzeichnet, dass innerhalb des Telemetriesignales zwei Start- und/oder zwei Endeblöcke vorgesehen sind und die Fehler- und Prüfinformation des Fehler- und des Endeblockes redundant übertragen wird.

5. Verfahren nach Anspruch 4, dadurch gekennzeichnet, dass der zweite empfangene Endeblock (E2) durch den ersten ausgesendeten Startblock (S1) des folgenden Telemetriesignales überschrieben wird und dass, wenn kein zweiter Endeblock (E2) empfangen wird, die Aussendung eines eigenen Telemetriesignales verhindert wird.

6. Verfahren nach Anspruch 5, dadurch gekennzeichnet, dass nur dann zwei Endeblöcke ausgesendet werden, wenn es sich um ein selbstgeneriertes Telemetriesignal handelt.

7. Verfahren nach einem der vorhergehenden Ansprüche, dadurch gekennzeichnet, dass beim Ausbleiben des Telemetriesignales des vorhergehenden Zwischenregenerators für eine Prüfzeit, die grösser als die Zykluszeit (T1) ist, selbständig eine Dauerkombination ausgesendet wird, in die im Abstand der Zykluszeit selbständig das Telemetriesignal eingeblendet wird.

8. Verfahren nach Anspruch 7, dadurch gekennzeichnet, dass als Dauerkombination eine Dauer-Eins oder eine Eins-Null-Wechsel verwendet wird.

9. Verfahren nach Anspruch 7 oder 8, dadurch gekennzeichnet, dass die erste Telemetriesignal-Einblendung nach dem Ausbleiben einer Dauerkombination oder eines Telemetriesignales frühestens nach einer Wartezeit T2 < T1 erfolgt und dass der Empfang eines Eingangssignales (Dauerkombination, Telemetriesignal) innerhalb einer Rückstellzeit von T3 < T2 die Eigensendung eines Telemetriesignales verhindert.

10. Zwischenregenerator zur Durchführung des Verfahrens nach einem der vorhergehenden Ansprüche, dadurch gekennzeichnet, dass jeder Zwischenregenerator (ZWR) einen Digitalsignal-Regenerator (DR) zur Regeneration des digitalen Signales und einen Telemetriesignal-Generator (TR) mit Fehlerüberwachungseinrichtungen, einer Code-Überwachungseinrichtung (UEC) und einer zweiten Überwachungseinrichtung (UE2) für das Ausgangssignal des Digitalsignal-Regenerators sowie weitere Überwachungseinrichtungen UE1, UE3) zur Eigenüberwachung enthält.

11. Zwischenregenerator nach Anspruch 10, dadurch gekennzeichnet, dass ein Telemetriesignal-Regenerator (TR) vorgesehen ist, dessen Eingang (ET) auf einem Demodulator (DE) mit einem nachfolgenden Regenerator (RE) geschaltet ist, dass der Ausgang des Regenerators (RE) mit dem Eingang einer Einsetzschaltung (ES) und dem Eingang einer ersten Überwachungsschaltung (UE1) verbunden ist, dass der Ausgang eines Fehlerzählers (FZ) über einen Datenbus (FB) mit einem ersten Eingang (1) eines Signalgenerators (SG) verbunden ist, dass dem Eingang einer Code-Überwachung (UEC) die aus dem digitalen Signal abgeleiteten Fehlerimpulse über einen Eingang (EF) zugeführt werden, dass der Ausgang der Code-Überwachung mit einem Eingang (1) des Fehlerzählers (FZ) verbunden ist, dass ein Rücksetzeingang (2) des Fehlerzählers (FZ) mit einem weiteren Ausgang der ersten Überwachung (UE1) verbunden ist, dass eine zweite Überwachungseinrichtung (UE2) zur Überwachung des Ausgangssignales des Zwischenregenerators vorgesehen ist, deren Ausgang mit einem zweiten Eingang des Signalgenerators (SE) verbunden ist, dass eine dritte Überwachungseinrichtung (UE3) vorgesehen ist, die an den Ausgang der Einsetzschaltung (ES) und an einen weiteren Ausgang des Signalgenerators (SG) angeschlossen ist, dass die dritte Überwachungsschaltung (UE3) über einen Steuerausgang in einen zweiten Eingang eines Modulators (MO) eingreift und die fehlerhafte Weitergabe eines zweiten Endeblockes von der Einsetzschaltung (ES) an den Modulator verhindert, dass die erste Überwachungsschaltung (UE1) sowohl die Startblöcke, Fehlerblöcke, Prüfblöcke als auch Endeblöcke erkennt und über einen Steuerausgang in den Eingang (3) des Signalgenerators (SG) eingreift und das Durchschalten des empfangenen Signals oder die Aussendung eines eigenen Telemetriesignales über den Datenbus (SB) und die Einsetzschaltung (ES) veranlasst und dass sie während des Empfangs von Fehlerblöcken an den Ausgang (AST) ein Signal abgibt, mit dem die Eigenprüfung des Zwischenregenerators durchgeführt wird.

12. Verfahren nach Anspruch 1, dadurch gekennzeichnet, dass die Eigenaussendung eines Telemetriesignals durch das Fehlen einer Anfangskennung im Anschluss an ein Telemetriesignal ausgelöst wird.

13. Verfahren nach Anspruch 12, dadurch gekennzeichnet, dass ein nicht vortäuschbares Rahmenkennungswort (RKW) zur Synchronisierung aller Telemetriesignal-Regeneratoren vom ersten intakten Zwischenregenerator ausgesendet und dem ersten Telemetriesignal (TS1) vorangestellt wird.

14. Verfahren nach Anspruch 13, dadurch gekennzeichnet, dass, wenn kein Rahmenkennungswort empfangen (RKW) worden ist, ein neu generiertes Rahmenkennungswort zum selben Zeitpunkt innerhalb einer Zyklusdauer ausgesendet wird.

15. Verfahren nach einem der vorhergehenden Ansprüche 1 bis 9 und 12 bis 14, dadurch gekennzeichnet dass die Telemetriesignale über eine Schleifenschaltung über Hin- und Rückschaltung des digitalen Übertragungssystems gesendet werden.

16. Schaltungsanordnung zur Durchführung des Verfahrens nach einem der vorhergehenden Ansprüche 12 bis 15, dadurch gekennzeichnet, dass der Eingang (ET) des Telemetriesignal-Regenerators (TR) über einen Abzweigpunkt (W1) an die Übertragungsleitung (KK) angeschlossen ist, dass der Eingang (ET) des Telemetriesignal-Regenerators auf einen Demodulator (DE) geführt ist, dessen Ausgang mit dem Eingang eines auf das Rahmenkennungswort (RKW) ansprechende Synchronisiereinrichtung (SY) und mit einem Dateneingang ED eines Laufzeitspeichers (LS) verbunden ist, dass an den Laufzeitspeicher eine Anfang-Ende-Erkennung (AK) angeschlossen ist, deren Ausgang mit dem Eingang einer Steuerung (STE) verbunden ist, dass über einen Eingang (EF) eine Code-Überwachung (UEC) an den zugehörigen Digitalsignal-Regenerator (DR) angeschlossen ist, dass der Ausgang der Code-Überwachung (UEC) auf den Eingang eines Kodierers (AK) geführt ist, der die Überprüfergebnisse der Code-Überwachung (UEC) in eine für das Telemetriesignal geeignete Form umsetzt, dass der Ausgang des Laufzeitspeichers und der Ausgang des Telemetriesignal-Registers (TRE) auf ein ODER-Glied (OD) geschaltet sind, dass eine Steuerleitung (SL) zwischen der Steuerung (STE) und dem Telemetriesignal-Register (TRE) sowie den Laufzeitspeicher (LS) vorgesehen ist, über die, ausgelöst durch die Anfang-Ende-Erkennung, alternativ eine Ausgangsleitung auf das ODER-Glied (OD) geschaltet wird, dass der Ausgang des ODER-Gliedes (OD) mit einem Eingang eines Modulators (MO) verbunden ist, dessen Ausgang auf einen Zusammenführungspunkt (W2) geschaltet ist, dessen zweiter Eingang an den Ausgang des Digitalsignal-Regenerators (DR) angeschlossen ist.

17. Schaltungsanordnung für eine Code-Überwachungsanordnung zur Fehlerüberwachung bei der Verwendung eines AMI-Codes, nach Anspruch 11, 12 oder 16, dadurch gekennzeichnet, dass die positiven AMI-Impulse auf den D-Eingang einer ersten D-Kippstufe (KD1) geführt sind, dass die negativen AMI-Impulse auf den D-Eingang einer zweiten D-Kippstufe (KD2) geführt sind, dass der Q-Ausgang der ersten Kippstufe (KD1) mit einem ersten ODER-Gatter (O1), mit einem zweiten invertierenden Eingang eines zweiten UND-Gatters (U2) und mit dem Setzeingang (S) einer dritten Kippstufe (K3) verbunden ist, dass der $\overline{Q}$-Ausgang der zweiten Kippfstufe (KD2) mit einem zweiten invertierenden Eingang eines ersten UND-Gatters (U1) mit dem Rücksetzeingang (R) der dritten Kippstufe (K3) und mit einem ersten Eingang (1) eines zweiten ODER-Gatters (O2) verbunden ist, dass der Q-Ausgang der ersten D-Kippstufe (KD1) und der $\overline{Q}$-Ausgang der zweiten D-Kippstufe (KD2) mit den Anschlussklemmen (ADS1) verbunden sind, dass der Q-Ausgang der dritten Kippstufe (K3) mit dem Eingang eines ersten Verzögerungsgliedes (V1) verbunden ist, dass der Ausgang dieses Verzögerungsgliedes mit einem ersten Eingang eines dritten UND-Gatters (U3) und einem ersten Eingang des ersten UND-Gatters (U1) verbunden ist, dass der $\overline{Q}$-Ausgang der dritten Kippstufe (K3) mit dem Eingang eines zweiten Verzögerungsgliedes (V2) verbunden ist, dass der Ausgang dieses zweiten Verzögerungsgliedes mit einem ersten Eingang eines vierten UND-Gatters (U2) verbunden ist, dass die Ausgänge (Q und $\overline{Q}$) der dritten Kippstufe (K3) auf Anschlusspunkte (ADS2) geführt sind, dass der Ausgang des ersten ODER-Gatters (O1) mit dem zweiten Eingang (2) des dritten UND-Gatters (U3) verbunden ist, dass der Ausgang des zweiten ODER-Gatters (O2) mit dem zweiten Eingang (2) des vierten UND-Gatters (U4) verbunden ist, dass die Ausgänge der UND-Gatter (U3 und U4) mit den Eingängen eines dritten ODER-Gatters (O3) verbunden sind, dessen Ausgang auf einen Anschlusspunkt (AF) geführt ist, dass ein Empfangstakt über einen Anschlusspunkt (ET) auf die Takteingänge der beiden D-Kippstufen (KD1 und KD2) und über ein Laufzeitglied (LS) auf jeweils den dritten Eingang (3) des dritten und vierten UND-Gatters (U3 und U4) geführt ist und dass ein Steuereingang (EST) auf jeweils den dritten Eingang des ersten und zweiten UND-Gatters (U1 und U2) geführt ist.

18. Schaltungsanordnung für eine Code-Überwachungseinrichtung bei der Verwendung des pBqT-Codes nach Anspruch 10, 11 oder 16, dadurch gekennzeichnet, dass dem D-Eingang einer ersten D-Kippstufe (KD11) die positiven Schrittumschläge zugeführt werden, dass dem D-Eingang einer zweiten D-Kippstufe (KD12), die negativen Schrittumschläge ebenfalls als positive Signale zugeführt werden, dass der Q-Ausgang der zweiten D-Kippstufe (KD12) mit einem ersten Eingang einer LDS-Überwachungsschaltung (LDS-UE) verbunden ist, dass der Q-Ausgang der ersten D-Kippstufe (KD11) mit einem ersten Eingang eines ODER-Gatters (O11) verbunden ist, dass der zweite Eingang des ODER-Gatters (O11) mit dem Ausgang eines UND-Gatters (U10) verbunden ist, dass der invertierende Eingang des UND-Gatters (U10) mit dem Q-Ausgang der zweiten D-Kippstufe (KD12) verbunden ist, dass der zweite Eingang des UND-Gatters (U10) mit einem Anschlusspunkt (EST) verbunden ist, auf dem ein Prüfsignal geschaltet wird, dass über einen Anschlusspunkt (ET) ein Empfangstakt auf die Takteingänge beider D-Kippstufen und auf den Takteingang der LDS-Überwachungsschaltung geschaltet ist, dass die LDS-Überwachungsschaltung das Bildungsgesetz der empfangenen Bits überprüft und bei einem Fehler an ihrem Ausgang einen Fehlerimpuls an den Anschlusspunkt (AF) abgibt.

**Revendications**

1. Procédé de contrôle de rérégénérateurs intermédiaires (ZWR), qui contiennent un régénérateur de signaux numériques (DR) et un régénérateur de signaux de télémétire (TR), entre deux appareils terminaux de ligne d'un système de transmission numérique, selon lequel les signaux de télémétrie sont transmis séparément pour chaque sens de transmission par l'intermédiaire de la même voie de transmission de signaux que les signaux de données numériques, mais dans une position de fréquence différente, et selon lequel un signal propre de télémétrie est émis cycliquement à partir du premier régénérateur de signaux de télémétrie (TR), qui ne reçoit aucun signal de télémétrie, et que le régénérateur de signaux de télémétrie (TR) de chaque régénérateur intermédiaire suivant (ZWR) produit un signal de télémétrie succédant au dernier signal de télémétrie reçue, avec les résultats d'un contrôle d'erreurs, et selon lequel un contrôle du signal de télémétrie reçu et émis (TS) est effectué et, dans l'appareil terminal de ligne situé du côté réception, les régénérateurs intermédiaires (ZWR) sont localisés au moyen d'un comptage des signaux de télémétrie, caractérisé par le fait que chaque régénérateur de signaux de télémétrie (TR) produit un signal de télémétrie (TS) comportant au moins un bloc de départ (Z), un bloc d'erreur (F) et un bloc de contrôle (P), que de façon connue en soi, des résultats de contrôle de la voie de transmission et du régénérateur respectif de signaux numériques (DR) sont transmis dans le bloc d'erreur (F) du signal de télémétrie associé (F), qu'un autocontrôle de dispositifs de contrôle d'erreurs (UEC, UE2) du régénérateur de signaux numériques (DR) est effectué par simulation d'erreurs et que le résultat de l'auto-contrôle est transmis dans le bloc de contrôle (P) du signal de télémétrie associé (TS).

2. Procédé suivant la revendication 1, caractérisé par le fait que pour l'auto-contrôle des dispositifs de contrôle d'erreurs UEC, UE2) des régénérateurs intermédiaires, un signal de commande d'auto-contrôle est envoyé aux dispositifs de contrôle d'erreurs pendant la transmission d'un ou de plusieurs blocs d'erreur (F) du signal de télémétrie associé.

3. Procédé suivant la revendication 1 ou 2, caractérisé par le fait que le signal de télémétrie contient au moins un bloc de départ (S) et au moins un bloc de fin (E).

4. Procédé suivant l'une des revendications précédentes, caractérisé par le fait que deux blocs de départ et/ou de fin sont prévus à l'intérieur du signal de télémétrie et que l'information d'erreur et de contrôle du bloc d'erreur et du bloc de fin est transmise d'une manière redondante.

5. Procédé suivant la revendication 4, caractérisé par le fait que le premier bloc de départ émis (S1) du signal de télémétrie suivant est inscrit en superposition sur le second bloc de fin reçue (E2) et que lorsqu'aucun second bloc de fin (E2) n'est reçu, l'émission d'un signal propre de télémétrie est empêchée.

6. Procédé suivant la revendication 5, caractérisé par le fait que seuls deux blocs de fin sont émis lorsqu'il s'agit d'un signal de télémétrie autogénéré.

7. Procédé suivant l'une des revendications précédentes, caractérisé par le fait que dans le cas de l'absence du signal de télémétrie du régénérateur intermédiaire précédent pendant une durée de contrôle qui est supérieure à la durée (T1) du cycle, il se produit l'émission automatique d'une combinaison permanente dans laquelle le signal de télémétrie est injecté automatiquement à des intervalles égaux à la durée du cycle.

8. Procédé suivant la revendication 7, caractérisé par le fait qu'on utilise comme combinaison permanente un UN permanent ou une alternance de UNS et de ZEROS.

9. Procédé suivant la revendication 7 ou 8, caractérisé par le fait que la première injection du signal de télémétrie intervient après l'absence d'une combinaison permanente ou d'un signal de télémétrie au plus tôt après un temps d'attente T2 < T1 et que la réception d'un signal d'entrée (combinaison permanente, signal de télémétrie) à l'intérieur d'une durée de remise à l'état initial T3 < T2 empêche l'émission propre d'un signal de télémétrie.

10. Régénérateur intermédiaire pour la mise en œuvre du procédé selon l'une des revendications précédentes, caractérisé par le fait que chaque régénérateur intermédiaire (ZWR) contient un régénérateur de signaux numériques (DR) servant à régénérer le signal numérique et un générateur de signaux de télémétrie (TR) comportant des dispositifs de contrôle d'erreurs, un dispositif (UEC) de contrôle de code, et un second dispositif de contrôle (UE2) pour le signal de sortie du générateur de signaux numériques ainsi que d'autres dispositifs de contrôle (UE1, UE3) pour l'auto-contrôle.

11. Régénérateur intermédiaire suivant la revendication 10, caractérisé par le fait qu'il est prévu un régénérateur de signaux de télémétrie (TR) dont l'entrée (ET) est raccordée à un démodulateur (DE) en aval duquel est branché un régénérateur (RE), que la sortie du régénérateur (RE) est reliée à l'entrée d'un circuit de chargement (ES) et à l'entrée d'un premier circuit de contrôle (UE1), que la sortie d'un compteur d'erreurs (FZ) est reliée à une première entrée (1) d'un générateur de signaux (FG), que les impulsions, d'erreur dérivées du signal numérique sont envoyées par l'intermédiaire d'une entrée (EF) à un dispositif de contrôle de code (UEC), que la sortie du dispositif de contrôle de code est reliée à une entrée (1) du compteur d'erreurs (FZ), qu'une entrée de remise à l'état initial (2) du compteur de défauts (FZ) est reliée à une autre sortie du premier dispositif de contrôle (UE1), qu'il est prévu un second dispositif de contrôle (UE2) servant à contrôler le signal de sortie du régénérateur intermédiaire et dont la sortie est reliée à une seconde entrée du régénérateur de signaux (SE), qu'il est prévue un troisième dispositif de contrôle (UE3) qui est raccordé à la sortie du circuit de chargement (ES) et à une autre sortie du générateur de signaux (SG), que le troisième circuit de contrôle (UE3) attaque par l'intermédiaire d'une sortie de commande une seconde entrée d'un modulateur (MO) et que la retransmission défectueuse d'un second bloc de fin par le circuit de chargement (ES) au modulateur empêche que le premier circuit de contrôle (UE1) identifie aussi bien les blocs de départ, les blocs de défaut, les blocs de contrôle que les blocs de fin et attaque par l'intermédiaire d'une sortie de commande l'entrée (3) du générateur de signaux (SG) et déclenche la transmission directe du signal reçu ou l'émission d'un signal propre de télémétrie par l'intermédiaire du bus de transmission de données (SB) et du circuit de chargement (ES) et que ledit circuit de contrôle délivre sur la sortie (ASC), pendant la réception de blocs d'erreur, un signal qui est envoyé au dispositif d'auto-contrôle du régénérateur intermédiaire.

12. Procédé suivant la revendication 1, caractérisé par le fait que l'émission propre d'un signal de télémétrie est déclenchée par l'absence d'un indicatif de départ à la suite d'un signal de télémétrie.

13. Procédé suivant la revendication 12, caractérisé par le fait qu'un mot d'identification de trame (RKW) ne pouvant pas être simulé et servant à la synchronisation de tous les régénérateurs de signaux de télémétrie est émis par le premier régénérateur intermédiaire intact et est inséré avant le premier signal de télémétrie (TS1).

14. Procédé suivant la revendication 13, caractérisé par le fait que lorsqu'aucun mot d'identification (RKW) n'a été reçu, un mot d'identification de trame nouvellement produit est émis au même instant au cours d'une durée d'un cycle.

15. Procédé suivant l'une des revendications précédentes 1 à 2 et 12 à 14, caractérisé par le fait que les signaux de télémétrie sont émis au moyen d'un circuit en boucle par l'intermédiaire du branchement dans le sens aller et dans le sens retour du système de transmission numérique.

16. Montage pour la mise en œuvre du procédé selon l'une des revendications précédentes 12 à 15, caractérisé par le fait que l'entrée (ET) du régénérateur de signaux de télémétrie (TR) est raccordée par l'intermédiaire d'un point de dérivation (W1) à la ligne de transmission (KK), que l'entrée (ET) du régénérateur de signaux de télémétrie est reliée à un démodulateur (DE) dont la sortie est reliée à l'entrée d'un dispositif de synchronisation (SY) répondant au mot d'identification de trame (RKW) et à l'entrée des données (ED) d'une mémoire à ligne à retard (LS), que la mémoire à ligne à retard est raccordée à un circuit d'identification de début et de fin (AK) dont la sortie est reliée à l'entrée d'un dispositif de commande (STE), qu'un dispositif de contrôle de code (UEC) est raccordé par l'intermédiaire d'une entrée (EF) au régénérateur associé de signaux numériques (DR), que la sortie du circuit de contrôle de code (UEC) est raccordée à l'entrée d'un codeur (AK) qui convertit les résultats du contrôle du circuit de contrôle de code (UEC) sous une forme appropriée pour le signal de télémétrie, que la sortie de la mémoire à ligne à retard et la sortie du registre des signaux de télémétrie (TRE) sont raccordées à un circuit OU (OD), qu'il est prévu entre le dispositif de commande (STE) et le registre de télémétrie (TRE) ainsi que la mémoire à ligne à retard (LS), une ligne de commande (SL) par l'intermédiaire de laquelle une ligne de sortie est raccordée de façon alternée au circuit OU (OD), sur la commande du circuit d'identification de début et de fin, que la sortie du circuit OU (OD) est reliée à une entrée d'un modulateur (MO) dont la sortie est raccordée à un point de jonction (W2) dont la seconde entrée est raccordée à la sortie du régénérateur de signaux numériques (DR).

17. Montage pour un dispositif de contrôle de code pour le contrôle d'erreurs dans le cas de l'utilisation d'un code AMI, suivant la revendication 11, 12 ou 16, caractérisé par le fait que les impulsions AMI positives sont envoyées à l'entrée (D) d'un premier étage à bascule bistable de type D (KD1), que les impulsions AMI négatives sont envoyées à l'entrée (D) d'un second étage à bascule bistable de type D (KD2), que la sortie Q du premier étage à bascule bistable (KD1) est reliée à un premier circuit OU (O1), à une seconde entrée inverseuse d'un second circuit ET (U2) et à l'entrée de positionnement (5) d'un troisième étage à bascule bistable (K3), que la sortie $\overline{Q}$ du second étage à bascule bistable (KD2) est reliée à une seconde entrée inverseuse d'un premier circuit ET (U1), à l'entrée de remise à l'état initial (R) du troisième étage à bascule bistable (K3) et à la première entrée (1) d'un second circuit OU (O2), que la sortie Q du premier étage à bascule bistable de type D (KD1) et la sortie $\overline{Q}$ du second étage à bascule bistable de type D (KD2) sont reliées aux bornes de connexion (ADS1), que la sortie Q du troisième étage à bascule bistable (K3) est reliée à l'entrée d'une première ligne à retard (V1), que la sortie de cette ligne à retard est reliée à une première entrée d'un troisème circuit ET (U3) et à une première entrée du premier circuit ET (U1) que la sortie $\overline{Q}$ du troisième étage à bascule bistable (K3) est reliée à l'entrée d'une seconde ligne à retard (V2), que la sortie de cette seconde ligne à retard est reliée à une première entrée d'un quatrième circuit ET (U2), que les sorties (Q et $\overline{Q}$) du troisième étage à bascule bistable (K3) sont raccordées à des points de connexion (ADS2), que la sortie du premier circuit OU (O1) est reliée à la seconde entrée (2) du troisième circuit ET (U3), que la sortie du second circuit OU (O2) est reliée à la seconde entrée (2) du quatrième circuit ET (T4), que les sorties des circuits ET (U3 et U4 sont reliées aux entrées d'un troisième circuit OU (O3), dans la sortie est raccordée à un point de connexion (AF), qu'une cadence de réception est envoyée par l'intermédiaire d'un point de connexion (ET) aux entrées de cadencement des deux étages à bascule bistable de type D (KD1 et KD2) et par l'intermédiaire d'une ligne à retard (LS) à la troisième entrée (3) des troisième et quatrième circuits ET (U3 et U4) et qu'une entrée de commande (EST) est raccordée à la troisième entrée des premier et second circuits ET (U1 et U2).

18. Montage pour un dispositifs de contrôle de code pour l'utilisation du code pBqT selon la revendication 10, 11 ou 16, caractérisé par le fait que les transitions positives sont envoyées à l'entrée D d'un premier étage à bascule bistable de type D (KD11), que les transitions négatives sont également envoyées en tant que signaux positifs à l'entrée D d'un second étage à bascule bistable de type D (KD12), que la sortie Q du second étage à bascule bistable de type D (KD12) est relié à une première entrée d'un circuit de contrôle LDS (LDS-UE), que la sortie Q du premier circuit à bascule bistable de type D (KD11) est reliée à une première entrée d'un circuit OU (O11), que la seconde entrée du circuit OU (O11) est reliée à la sortie d'une porte ET (U10), que l'entrée inverseuse du circuit ET (U10) est reliée à la sortie sortie Q du second étage à bascule bistable de type D (KD12), que la seconde entrée du circuit ET (U10) est reliée à un point de connexion (EST) auquel est envoyé un signal de contrôle, qu'une cadence de réception est envoyée par l'intermédiaire d'un point de connexion (ET) aux entrées de cadence de deux étages à bascule bistable et à l'entrée de cadence du circuit de contrôle LDS et que ce circuit de contrôle LDS contrôle la loi de formation des bits reçus et, dans le cas d'une erreur délivre au niveau de sa sortie une impulsion d'erreur au point de connexion (AF).

## Claims

1. Method for monitoring intermediate regenerators (ZWR) which include a digital signal regenerator (DR) and a thelemetry signal regenerator (TR), between two line terminal devices of a digital transmission system, wherein telemetry signals are transmitted separately for each transmission direction via the same signal path as the digital data signals but in a different frequency position, wherein the first telemetry signal regenerator (TR), which does not receive a telemetry signal, cyclically transmits its own telemetry signal, and the telemetry signal regenerator (TR) of each following intermediate regenerator (ZWR) generates a telemetry signal which adjoins the last received telemetry signal and which includes results of a fault monitoring procedure, wherein a monitoring of the received and transmitted telemetry signal (TS) is carried out, and at the receiving-end line terminal device the intermediate regenerators (ZWR) are localised by counting the telemetry signals, characterised in that each telemetry signal regenerator (TR) generates a telemetry signal (TS) comprising at least one start block (S), a fault block (F) and a test block (P), that in known manner monitoring results of the transmission link and of the particular digital signal regenerator (DR) are transmitted in the fault block (F) of the associated telemetry signal (TS), that fault monitoring devices (UEC, UE2) of the digital signal regenerator (DR) are self-monitored by the simulation of faults, and that the result of the self-monitoring is transmitted in the test block (P) of the associated telemetry signal (TS).

2. Method as claimed in claim 1, characterised in that for the self-monitoring of the fault monitoring devices (UEC, UE2) of the intermediate regenerators, during the transmission of one or more fault blocks (F) of the assigned telemetry-signal the fault monitoring devices are supplied with a control signal for purposes of self-monitoring.

3. Method as claimed in claim 1 or 2, characterised in that the telemetry signal includes at least one start block (S) and at least one end block (E).

4. Method as claimed in one of the preceding claims, characterised in that two start blocks and /or two end blocks are provided within the telemetry signal and the fault information and test information of the fault block and end block are transmitted in redundant fashion.

5. Method as claimed in claim 4, characterised in that the second received end block is overwritten by the first transmitted start block (S1) of the following telemetry signal and that if no second end block (E2) is received the transmission of a characteristic telemetry signal is prevented.

6. Method as claimed in claim 5, characterised in that two end blocks are transmitted only when the telemetry signal is self-generated.

7. Method as claimed in one of the preceding claims, characterised in that when the telemetry signal of the preceding intermediate regenerator fails to appear for a test time which is greater than the cycle time (T1), a continuous combination is automatically transmitted into which the telemetry signal is automatically gated in the interval of the cycle time.

8. Method as claimed in claim 7, characterised in that a continuous-one or a one-zero-alternation is used as continuous combination.

9. Method as claimed in claim 7 or 8, characterised in that the gating-in of the first telemetry signal following the absence of a continuous combination or a telemetry signal takes places at the earliest following a waiting period $T2 < T1$, and that the reception of an input signal (continuous combination, telemetry signal) within a reset period of $T3 < T2$ prevents the self-transmission of a telemetry signal.

10. Intermediate regenerator for the implementation of the method claimed in one of the preceding claims, characterised in that each intermediate regenerator (ZWR) includes a digital signal regenerator (DR) which serves to regenerate the digital signal, and a telemetry signal generator (TR) provided with fault monitoring devices, a code monitoring device (UEC) and a second monitoring device (UE2) for the output signal of the digital signal regenerator, and also includes further monitoring devices (UE1, UE3) for self-monitoring purposes.

11. Intermediate regenerator as claimed in claim 10, characterised in that a telemetry signal regenerator (TR) is provided whose input (ET) is connected to a demodulator (DE) followed by a regenerator (RE), that the output of the regenerator (RE) is connected to the input of an insertion circuit (ES) and to the input of a first monitoring circuit (UE1), that the output of a fault counter (FZ) is connected via a data bus (FB) to a first input (1) of a signal generator (SG), that the input of a code monitoring unit (UEC) is supplied via an input (EF) with the fault pulses derived from the digital signal, that the output of the code monitoring unit is connected to an input (1) of the fault counter (FZ), that a reset input (2) of the fault counter (FZ) is connected to a further output of the first monitoring unit (UE1), that a second monitoring device (UE2) is provided which serves to monitor the output signal of the intermediate regenerator and whose output is connected to a second input of the signal generator (SE), that a third monitoring device (UE3) is provided which is connected to the output of the insertion circuit (ES) and to a further output of the signal generator (SG), that the bird monitoring circuit (UE3) acts upon the second input of a modulator (MO) and prevents the faulty transmission of a second end block from the insertion circuit (ES) to the modulator, that the first monitoring circuit (UE1) recognises both the start blocks, fault blocks, test blocks and end blocks and acts via a control output upon the input (3) of the signal generator (SG) and instigates the swichthrough of the received signal or the transmission of a characteristic telemetry signal via the data bus (SB) and the insertion circuit (ES), and that during the reception of fault blocks it supplies the output (AST) with a signal on the basis of which a self-testing of the intermediate regenerator is carried out.

12. Method as claimed in claim 1, characterised in that the self-transmission of a telemetry signal is triggered by the absence of a start code following a telemetry signal.

13. Method as claimed in claim 12, characterised in that a non-simulatable frame code word (RKW) which serves to synchronise all the telemetry signal regenerators is transmitted from the first intact intermediate regenerator and precedes the first telemetry signal (TS1).

14. Method as claimed in claim 13, characterised in that when no frame code word (RKW) has been received, a newly generated frame code word is transmitted at the same moment of time within a cycle duration.

15. Method as claimed in one of the preceding claims 1 to 9 and 12 to 14, characterised in that the telemetry signals are transmitted via a loop circuit by switching the digital transmission system back and forth.

16. Circuit arrangement for the implementation of the method claimed in one of the preceding claims 12 to 15, characterised in that the input (ET) of the telemetry signal regenerator (TR) is connected via a branch point (W1) to the transmission line (KK), that the input (ET) of the telemetry signal regenerator leads to a demodulator (DE) whose output is connected to the input of a synchronising device (SY) which responds to the frame code word (RKW), and is further connected to a data input (ED) of a delay-line store (LS), that the delay-line store is connected to a start-end recognition unit (AK) whose output is connected to the input of a control unit (STE), that via an input (EF) a code monitoring unit (UEC) is connected to the associated digital signal regenerator (DR), that the otuput of the code monitoring unit (UEC) leads to the input of a coder (AK) which converts the test results of the code monitoring unit (UEC) into a form suitable for the telemetry signal, that the output of the delay-line store and the output of the telemetry signal register (TRE) are connected to an OR-gate (OD), that a control line (SL) is provided between the control unit (STE) and the telemetry signal register (TRE) and the delay-line store (LS) via which, triggered by the start-end recognition unit, an output line is alternatively switched to the OR-gate (OD), that the output of the OR-gate (OD) is connected to an input of a modulator (MO) whose output is connected to a junction point (W2), whose second input is connected to the output of the digital signal regenerator (DR).

17. Circuit arrangement for a code monitoring arrangement for monitoring faults in the use of a AMI-code, as claimed in claim 11, 12 or 16, characterised in that the positive AMI-pulses are fed to the D-input of a first D-flip-flop (KD1), that the negative AMI-pulses are fed to the D-input of a second D-flip-flop (KD2), that the Q-output of the first flip-flop (KD1) is connected to a first OR-gate (O1), to a second inverting input of a second AND-gate (U2), and to the set input (S) of a third flip-flop (K3), that the $\overline{Q}$-output of the second flip-flop (KD2) is connected to a second inverting input of a first AND-gate (U1), to the reset input (R) of the third flip-flop (K3) and to a first input (1) of a second OR-gate (O2), that the Q-output of the first D-flip-flop (KD1) and the $\overline{Q}$-output of the second D-flip-flop (KD2) are connected to the connection terminals (ADS1), that the Q-output of the third flip-flop (K3) is connected to the input of a first delay line (V1), that the output of this delay line is connected to a first input of a third AND-gate (U3) and to a first input of the first AND-gate (U1), that the $\overline{Q}$-output of the third flip-flop (K3) is connected to the input of a second delay line (V2), that the output of this second delay line is connected to a first input of a fourth AND-gate (U2), that the outputs (Q and $\overline{Q}$) of the third flip-flop (K3) lead to terminal points (ADS2), that the output of the first OR-gate (O1) is connected to the second input (2) of the third AND-gate (U3), that the output of the second OR-gate (O2) is connected to the second input (2) of the fourth AND-gate (U4), that the outputs of the AND-gates (U3 and U4) are connected to the inputs of a third OR-gate (O3) whose output leads to a terminal point (AF), that a received clock pulse train is fed via a terminal point (ET) to the clock pulse inputs of the two D-flip-flops (KD1 and KD2) and via a delay-line (LS) to the third input (3) of the bird and fourth AND-gates (U3 and U4), and that a control input (EST) in each case leads to the third input of the first and second AND-gates U1 and U2).

18. Circuit arrangement for a code monitoring device in the use of the pBqT-code as claimed in claim 10, 11 or 16, characterised in that the D-input of a first D-flip-flop (KD11) is supplied with the positive pulse transitions, that the D-input of a second D-flip-flop (KD12) is likewise supplied with the negative pulse transitions as positive signals, that the Q-output of the second D-flip-flop (KD12) is connected to a first input of an LDS-monitoring circuit (LDS-UE), that the Q-output of the first D-flip-flop (KD11) is connected to a first input of an OR-gate (O11), that the second input of the OR-gate (O11) is connected to the output of an AND-gate (U10), that the inverting input of the AND-gate (U10) is connected to the Q-output of the second D-flip-flop (KD12), that the second input of the AND-gate (U10) is connected to a terminal point (EST) to which a test signal is connected, that via a terminal point (ET) a received pulse train is connected to the clock pulse inputs of the two D-flip-flops and to the clock pulse input of the LDS-monitoring circuit, that the LDS-monitoring circuit checks the formation rule of the received bits and in the event of a fault emits a fault pulse from its output to the terminal point (AF).

1/8

FIG 1

# FIG 2

0 044 556

$< T1$ — — $T1$

ZWR1  | 1:1 | S1,1 | S2,1 | F1 | $\overline{F1}$ | P1 | $\overline{P1}$ | E1,1 | E2,1 | 1:1 | S1,1
TS1,1

ZWR2  | 1:1 | S1,1 | S2,1 | F1 | $\overline{F1}$ | P1 | $\overline{P1}$ | E1,1 | S1,2 | S2,2 | F2 | $\overline{F2}$ | P2 | $\overline{P2}$ | E1,2 | E2,2 | 1:1 | S1,1
TS1,2

ZWR3  | 1:1 | S1,1 | S2,1 | F1 | $\overline{F1}$ | P1 | $\overline{P1}$ | E1,1 | S1,3 | S2,2 | F2 | $\overline{F2}$ | P2 | $\overline{P2}$ | E1,2 | S1,3 | S2,3 | F3 | $\overline{F3}$ | P3 | $\overline{P3}$ | E1,3 | E2,3 | 1:1 | S1,1
TS1,3

17

3/8

FIG 3

4/8

FIG 4

5/8

FIG 5

6/8

FIG 6

| ANFANGS=KENNUNG | INFORMATIONSTEIL |
|---|---|

A             TS *             IT

# FIG 7

TR*(n-1) | RKW | A | IT(1) | --- | A | IT(n-1) |

TS1    TS(n-1)

TR*(n) | RKW | A | IT(1) | --- | A | IT(n-1) | A | IT(n) |

τ

TS(n)

TR*(n+1) | RKW | A | IT(1) | --- | A | IT(n-1) | A | IT(n) | A | (n+1) |

TS1    TS(n+1)

TR*(n+2) | RKW | A | IT(1) | --- | A | IT(n-1) | A | IT(n) | A | IT(n+1) | A | IT(n+2) |

τ

t →

7/8

0 044 556

0 044 556

FIG 8

EZW o—KK—→ [W1] ——→ DIGITALSIGNAL-REGENERATOR ——→ [W2] ——→o AZW

ET

DR          EF                                    AT

CODE-ÜBER=WACHUNG    UEC

MO

ZWR*

DE [4]          KODIERER    AK

OD

STE    STEUERUNG          SL    ED    TRE

AEK    ANFANG/ENDE ERKENNUNG

LS
ED    LAUFZEIT SPEICHER

SY          ESY    [÷]    ET TAKTE    [—o—]

RT                      OS

TR*